# EUROPÄISCHE PATENTSCHRIFT

(11) **EP 2 452 900 B1**
(45) Veröffentlichungstag und Bekanntmachung des Hinweises auf die Patenterteilung: **12.11.2014**
(21) Anmeldenummer: 11401624.9
(22) Anmeldetag: 04.11.2011
(51) Int. Cl.: B65G 1/04, B65G 1/137, B25H 3/04, B25H 3/02

(54) **Rollcontainer-Beladestation, Kommissioniervorrichtung mit einer solchen Station und entsprechende Verfahren**
Rollcontainer loading station, commissioning system with such a station and corresponding methods
Station de chargement de chariots-cages, système de commissionnement avec une telle station et procédés correspondants

(30) Priorität: 10.11.2010 DE 102010060483
(43) Veröffentlichungstag der Anmeldung: 16.05.2012
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- EP-A1- 1 270 452
- EP-A1- 1 516 832
- EP-A2- 1 136 395
- EP-A2- 1 710 175
- EP-A2- 2 154 088
- EP-A2- 2 236 441
- WO-A1-2007/124796
- WO-A1-2008/068264
- WO-A1-2010/046809
- WO-A1-2010/047595
- DE-U1-202006 005 137
- DE-U1-202009 009 773

## Beschreibung

### HINTERGRUND DER ERFINDUNG

### GEBIET DER ERFINDUNG

Die vorliegende Erfindung betrifft eine Rollcontainer-Paletten-Beladestation, eine Vorrichtung zur Kommissionierung von Paletteneinheiten, ein Verfahren zur automatisierten Beladung von Rollcontainern mit Paletteneinheiten und ein Verfahren zum automatisierten Kommissionieren von Paletteneinheiten.

### STAND DER TECHNIK

In Einzelhandelsgeschäften werden immer häufiger sogenannte Displaypaletten eingesetzt, bei denen die Waren direkt von der Palette verkauft werden, sodass ein Umpacken der Ware von den Paletten in Verkaufsregale eingespart werden kann. Derartige Displaypaletten sind jedoch überwiegend kleiner dimensioniert, als bisher verwendete EU-Standardpaletten oder dergleichen, da die Anzahl der Waren, die auf den bisher bekannten Paletten für ein Einzelhandelsgeschäft zu groß ist. Entsprechend werden die Displaypaletten als sogenannte Viertel-oder Halbpaletten ausgeführt, die in ihrer Größe dem Viertel oder der Hälfte einer EU-Standardpalette entsprechen. Auf diese Weise lässt sich die Anzahl der Waren, die auf der Displaypalette angeordnet sind, verringern, was die Lagerhaltungskosten für die Einzelhandelsgeschäfte erniedrigt. Außerdem ist der Platzbedarf für derartige Displaypaletten geringer und die Gefahr, dass verderbliche Ware, die nicht schnell genug verkauft werden kann, verdirbt, reduziert sich ebenfalls.

Allerdings besteht bei der Verwendung kleiner dimensionierter Paletten in der Logistikkette vom Hersteller der Waren bis zu dem Einzelhandelsgeschäft eine zusätzliche Problematik darin, dass die kleineren Paletteneinheiten gehandhabt werden müssen.

Üblicherweise wird hier so vorgegangen, dass die kleineren Paletteneinheiten, also Viertelpaletten oder Halbpaletten auf größeren Standardpaletten angeliefert werden. Beispielsweise verpackt der Hersteller seine Waren so, dass vier Viertelpaletten oder zwei Halbpaletten auf einer EU-Palette ausgeliefert werden.

Da zu den Einzelhandelsgeschäften lediglich einzelne Paletteneinheiten in Form von Viertel- oder Halbpaletten ausgeliefert werden sollen, muss zwischen der Auslieferung vom Hersteller bis zur Anlieferung beim Einzelhandelsgeschäft ein Umpacken erfolgen. Dies erfolgt üblicherweise in großen Zentral- und Versandlagem, bei denen die Waren in großen Verpackungseinheiten angeliefert und in kleineren Verpackungseinheiten an die Einzelhandelsgeschäfte ausgeliefert werden. Dieser Vorgang, der allgemein als Kommissionierung bekannt ist, ist jedoch sehr arbeitsintensiv.

So müssen bei manuellen Kommissioniervorgängen die angelieferten Waren ausgepackt und entsprechend der Kommissionieraufträge dann in kleineren Verpackungseinheiten zusammengestellt und verpackt werden. Bestellt beispielsweise ein Einzelhandelsgeschäft oder eine Filiale einer Einzelhandelskette verschiedene einzelne Displaypaletten, so werden bisher manuell aus dem Lager die einzelnen Paletteneinheiten (Displaypaletten) geholt und zur Auslieferung an das Einzelhandelsgeschäft bereitgestellt.

Die WO 2010/047595 A1 offenbart eine Beladevorrichtung für Paletten, bei der lose Gegenstände lagenweise von einer Greifeinrichtung ergriffen und auf einer Palette oder einem Rollcontainer abgelegt werden können. Die Greifeinrichtung weist einen viereckigen Rahmen auf, an dem an zwei Seiten nach unten verlaufende Seitenwände aus einer Vielzahl parallel angeordneter Stäbe ausgebildet sind, wobei die Stäbe verfahrbar an dem Rahmen angeordnet sind, sodass die Höhe der durch die Stäbe gebildeten Seitenwände einstellbar ist, um unterschiedliche hohe Gegenstände aufnehmen zu können. An den unteren Enden der Stäbe sind horizontal verlaufende Stäbe angeordnet, die in horizontaler Richtung verfahrbar sind, sodass sie die aufzunehmenden Gegenstände untergreifen und lagern können. Eine derartige Struktur ist kampliziert aufgebaut und komplex zu bedienen sowie für die Aufnahme von Paletten auf Grund der Gewichtsverhältnisse und der Dimensionen kaum geeignet.

Dieses Dokument offenbart eine Rollcontainer-Paletten-Beladestation gemäß dem Oberbegriff des Anspruchs 1.

### OFFENBARUNG DER ERFINDUNG

### AUFGABE DER ERFINDUNG

Es ist deshalb Aufgabe der vorliegenden Erfindung eine Rollcontainer-Paletten-Beladestation bereitzustellen, welche den Aufwand, wie er beispielsweise bei der manuellen Kommissionierung vorhanden ist, reduziert. Dabei soll die Beladestation einfach aufgebaut und einfach handhabbar sein.

### TECHNISCHE LÖSUNG

Diese Aufgabe wird gelöst durch eine Rollcontainer-Paletten-Beladestation mit den Merkmalen des Anspruchs 1. Vorteilhafte Ausgestattungen sind Gegenstand der abhängigen Ansprüche.

Mit der vorliegenden Erfindung wird ein vollautomatisches System geschaffen, mit dem Paletteneinheiten kommissioniert werden können. Bei dem Kommissioniersystem wird so vorgegangen, dass angelieferte Waren in Paletteneingangseinheiten mit mehreren Paletteneinheiten mit identischen Waren an einer Anlieferstation bereitgestellt werden, wo sie von einem gemeinsamen Palettenträger, wie beispielsweise einer EU-Standardpalette entladen werden.

Die entladenen Paletteneinheiten werden in einem Kommissionierlager, beispielsweise in Form eines Regallagers, auch Paletteneinheitenregal genannt, eingelagert. In dem Kommissionierlager stehen die Paletteneinheiten bereit, um in unterschiedlicher Zusammenstellung auf einem Palettenträger wieder ausgegeben zu werden. Das Kommissionierlager kann in jeder geeigneten Form realisiert werden, auch wenn ein Regallager mit ein oder mehreren Regalreihen eine vorteilhafte Ausführungsform ist. Entsprechend werden die Begriffe Regal, Regallager oder Paletteneinheitenregal im Folgenden auch so verstanden, dass sie andere Formen eines Kommissionierlagers mit einschließen.

Vorzugsweise sind in dem Kommissionierlager sämtliche zu kommissionierenden Waren in entsprechenden Paletteneinheiten vorrätig, so dass ein Kommissionierauftrag vollständig mit Waren aus dem Kommissionierlager ausgeführt werden kann.

Durch eine Steuer- und/oder Überwachungseinheit, die durch eine programmtechnisch entsprechend ausgerüstete Datenverarbeitungsanlage realisiert werden kann, kann genau registriert und gespeichert werden, welche Waren wo im Kommissionierlager, also den entsprechenden Lagerplätzen, z. B. eines Paletteneinheitenregals eingelagert werden und entsprechend vorrätig sind. Bei Eingang eines Kommissionierauftrags kann dann die Steuer-und/oder Überwachungseinrichtung gemäß dem Kommissionierauftrag eine geeignete Zusammenstellung der Waren vornehmen oder eine entsprechende Zusammenstellung empfangen, um die Befehle ausgeben, um die notwendigen Paletteneinheiten aus dem Kommissionierlager zu entnehmen und auf einem entsprechenden Palettenträger zusammenzustellen.

Zum Entladen der Paletteneinheiten von einer Paletteneingangseinheit sowie zum Einlagern der Paletteneinheiten in das Kommissionierlager sowie wiederum zur Entnahme der Paletteneinheiten aus dem Kommissionierlager und zur Zusammenstellung der Paletteneinheiten auf einem Palettenträger kann eine entsprechend automatisiertes Handhabungsgerät, wie beispielsweise ein Querverschiebewagen vorgesehen sein, der sich auf einem Transportpfad bewegt. Der Transportpfad des Handhabungsgeräts kann die Anlieferstation der Paletteneingangseinheiten, bei der die Paletteneinheiten entladen werden, die Abgabestation der Palettenausgangseinheiten, bei der die Palettenausgangseinheiten aus verschiedenen Paletteneinheiten zusammengestellt und ausgegeben werden, und das Kommissionierlager miteinander verbindet.

Das Handhabungsgerät für Paletteneinheiten, also beispielsweise ein Querverschiebewagen, wird dabei auch vollautomatisch von der Steuerungs- und/oder Überwachungseinheit gesteuert.

Das Kommissionierlager kann als Regallager bzw. Paletteneinheitenregal mit mindestens zwei, vorzugsweise mehreren Regalreihen ausgebildet sein, wobei zwischen den Regalreihen in entsprechenden Regalgassen Regalbediengeräte verfahrbar sind, die die einzelnen Lagerplätze in den Paletteneinheitenregalen anfahren können. Damit kann eine Vielzahl von Paletteneinheiten in dem Kommissionierlager gelagert werden.

Insbesondere kann das Kommissionierlager mit dem Transportpfad des Handhabungsgeräts, insbesondere des Querverschiebewagens derart kooperieren, dass in Kooperation mit dem Regalbediengerät ein Teil der Lagerplätze als Übergabeplätze genutzt werden können, bei denen das oder die Regalbediengeräte die dort abgelegten Paletteneinheiten in endgültige Lagerpositionen weiterbewegen oder Paletteneinheiten, die aus dem Regal ausgelagert werden sollen, zur Abholung für das Handhabungsgerät bereitstellen kann.

Neben dem oben beschriebenen Materialfluss, bei dem die Paletteneinheiten von der Anlieferstation in das Kommissionierlager und vom Kommissionierlager in die Abgabestation befördert werden, kann ein Teil der entladenen Paletteneinheiten direkt zum Beladen eines Palettenträgers in der Abgabestation verwendet werden, wenn beispielsweise nach einem Einlagerungsauftrag zur Einlagerung neuer Ware in das Kommissionierlager ein Kommissionierauftrag bearbeitet wird, bei dem eine Paletteneinheit mit den gerade eingelagerten neuen Waren benötigt wird.

Bei der Abgabestation werden üblicherweise verschiedene Paletteneinheiten, also Paletteneinheiten mit jeweils in sich identischen Waren, aber zueinander unterschiedlichen Waren zu einer Palettenausgangseinheit zusammengestellt. Die Palettenausgangseinheit kann aus Paletteneinheiten auf einem Palettenträger gebildet werden, die an das Einzelhandelsgeschäft verschickt wird. Hierbei gilt es zu beachten, dass nicht zwangsweise alle Paletteneinheiten auf einem Palettenträger unterschiedlich sein müssen. Selbstverständlich können auch mehrere identische Paletteneinheiten auf einem Palettenträger angeordnet werden.

Die bei der Abgabestation auf einem Palettenträger angeordneten Paletteneinheiten können unmittelbar die Palettenausgangseinheit darstellen oder eine Zwischenform bilden, wenn die Paletteneinheiten auf einen anderen Palettenträger umgepackt werden, wie beispielsweise Rollcontainer. Entsprechend kann der Palettenträger, auf dem die Paletteneinheiten in der Abgabestation zusammen gestellt werden, auch als Zwischenträger angesehen werden, von dem die Paletteneinheiten anschließend in die endgültige Palettenausgangseinheit überführt werden. Beispielsweise kann die endgültige Palettenausgangseinheit Rollcontainer umfassen, sodass die auf einem Zwischenträger, wie einer Palette, zusammengestellten Paletteneinheiten anschließend in einem Rollcontainer überführt werden.

Entsprechend umfasst die vorliegende Erfindung auch ein Verfahren und eine Vorrichtung zur automatisierten Beladung von Rollcontainern mit Paletteneinheiten (Rollcontainer-Paletten-Beladestation). Hierbei werden ein oder mehrere Paletteneinheiten, beispielsweise auf einem Zwischenträger, und ein oder mehrere Rollcontainer, beispielsweise auf einem Rollcontainerträger, nebeneinander an einer Paletten-Bereitstellungsposition und einer Rollcontainer-Bereitstellungsposition angeordnet und mittels einer Palettentragevorrichtung, durch mindestens eine lineare Bewegung auf einen entsprechenden Rollcontainer geladen.

Hierbei können mehrere vorzugsweise nacheinander ausgeführte lineare Bewegungen der Palettentragevorrichtung vorgesehen sein, wobei die Palettentragevorrichtung die Paletteneinheit anheben kann, linear in eine Position über dem Rollcontainer verfahren und dort linear absenken kann. Die lineare Bewegung von einer Paletten-Bereitstellungsposition zur Rollcontainer-Bereitstellungsposition kann quer, insbesondere senkrecht zur Zu- und/oder Abfuhrrichtung der Paletteneinheiten und/oder der Rollcontainer erfolgen.

Die Palettentragevorrichtungen können Ladegabeln umfassen, die zum Ergreifen der Paletteneinheiten dienen. Hierbei können die Ladegabeln so ausgeführt sein, dass sie mehrere Paletteneinheiten auf einmal ergreifen können, z. B. insbesondere in Form einer Teleskopladegabel.

Die Rollcontainer-Paletten-Beladestation umfasst zumindest zwei Palettentragevorrichtungen, die einander gegenüberliegend auf jeder Seite der Rollcontainer-Bereitstellungsposition und der Paletten-Bereitstellungsposition vorgesehen sein können. Dadurch ist es möglich, dass die Paletteneinheiten von beiden Seiten ergriffen werden können, was insbesondere bei der Verladung von mehreren hintereinander angeordneten Paletteneinheiten vorteilhaft ist, da beispielsweise mehrere Paletteneinheiten gleichzeitig umgeladen werden können. Insbesondere bei Paletteneinheiten mit unsymmetrisch ausgebildeten Eingriffsöffnungen für Ladegabeln kann dies vorteilhaft sein, da hintereinander angeordnete Paletteneinheiten nicht von einer einzigen Ladegabel ergriffen werden können. Beispielsweise für die Verladung von Viertelpaletten kann dies vorteilhaft sein, da zwei hintereinander angeordnete Viertelpaletten durch die unsymmetrische Ausbildung der Eingreiföffnungen bzw. der Füße unter Umständen nicht von einer Palettentragevorrichtung von einer Seite ergriffen werden können.

Die zwei Palettentragevorrichtungen sind unabhängig voneinander und zusammen miteinander fahrbar, sodass separat oder gleichzeitig miteinander entsprechende Paletteneinheiten bewegt werden können.

Um eine Ausrichtung der Rollcontainer und der Paletteneinheiten für eine einfache lineare Übertragungsbewegung zu ermöglichen, kann zumindest für die Rollcontainer oder die Paletteneinheiten, vorzugsweise jedoch für beide eine Transportvorrichtung vorgesehen sein, die es ermöglicht, die Rollcontainer und/oder die Paletteneinheiten quer zur Hauptbewegungsrichtung der Palettentragevorrichtung zu verschieben. Die entsprechende Ausrichtung kann vollautomatisiert erfolgen, da entsprechende Sensoren, wie Lichtschranken und dergleichen die exakte erforderliche Position bestimmen können.

Um sicherzustellen, dass die Rollcontainer ausreichend Freiraum für die Beladung mit Paletteneinheiten bereit stellen, was durch nach innen geneigte Seitenwände beeinträchtigt sein kann, kann eine Seitenwand-Spreizvorrichtung vorgesehen sein, die die Seitenwände der zu beladenden Rollcontainer nach außen spreizen kann. Dazu kann die Seitenwand-Spreizvorrichtung in zwei Richtungen, nämlich vorzugsweise den unabhängigen Richtungen parallel zur Beladefläche der Rollcontainer, verfahrbare Spreizelemente aufweisen.

### KURZE BESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in rein schematischer Weise in
- Figur 1: eine Übersicht über eine Kommissionieranlage als Teil eines Warenversandzentrums für eine Einzelhandelskette;
- Figur 2: ein Detail der Kommissionieranlage aus Figur 1;
- Figur 3: eine perspektivische Ansicht einer erfindungsgemäßen Vorrichtung zur Beladung von Rollcontainern mit Paletten;
- Figur 4: eine perspektivische Detailansicht der Seitenwand-Spreizvorrichtung der Rollcontainer-Paletten-Beladestation aus Figur 3;
- Figur 5: eine Darstellung des Beladeablaufs der Rollcontainerbeladung mit Halbpaletten;
- Figur 6: eine Darstellung des Beladeablaufs einer Rollcontainerbeladung mit Viertelpaletten;
- Figur 7: eine perspektivische Darstellung eines Rollcontainers auf einem Rollcontainerträger;
- Figur 8: eine Bodenansicht einer Viertelpalette.

### AUSFÜHRUNGSBEISPIELE

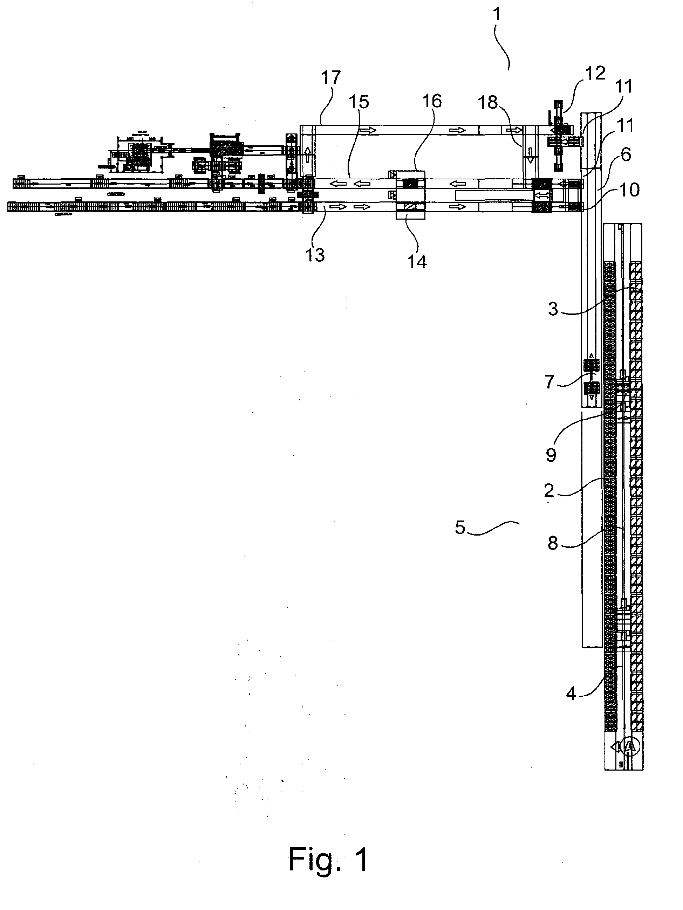

Die Figur 1 zeigt eine Übersicht einer Kommissionieranlage für die Kommissionierung von Paletteneinheiten, wie beispielsweise sogenannten Display-Paletten, Viertelpaletten oder Halbpaletten. Die Viertelpaletten entsprechen hierbei einem Viertel einer EU-Standardpalette während die Halbpaletten der Hälfte einer EU-Standardpalette entsprechen. Derartige Viertel-oder Halbpaletten werden in Einzelhandelsgeschäften zum direkten Verkauf der auf den Paletten angeordneten Waren eingesetzt, sodass diese Viertel- oder Halbpaletten direkt im Einzelhandelsgeschäft positioniert werden und ein Umschlichten der Ware von der Palette in ein Regal entfällt.

Die in Figur 1 gezeigte Kommissionieranlage dient dazu, die in Paletteneingangseinheiten angelieferten Paletten entsprechend den Kommissionieraufträgen in Palettenausgangseinheiten überzuführen. Die Paletteneingangseinheiten bestehen aus einer Mehrzahl sortenreiner

Paletteneinheiten, also mehreren Viertelpaletten oder Halbpaletten, die alle identische Waren tragen. Da auf einer EU-Standardpalette jeweils vier Viertelpaletten oder zwei Halbpaletten angeordnet sind, ist eine derartige Versand- oder Verpackungseinheit für ein Einzelhandelsgeschäft zu groß, da einerseits kein entsprechender Lagerplatz zur Verfügung steht und andererseits nicht entsprechend viele Waren innerhalb der Anlieferungszyklen verkauft werden. Entsprechend muss für die Auslieferung in ein Einzelhandelsgeschäft eine Kommissionierung erfolgen, wobei Palettenausgangseinheiten gebildet werden, bei denen Paletteneinheiten mit unterschiedlichen Waren auf einem Palettenträger, wie beispielsweise einer EU-Standardpalette angeordnet sind. Neben Paletteneinheiten können entsprechende andere Wareneinheiten ebenfalls auf dem Palettenträger, also der EU-Standardpalette, angeordnet sein.

Neben der Anordnung der Viertel- oder Halbpaletten oder sonstigen Paletteneinheiten auf einem größerem Palettenträger, wie beispielsweise einer EU-Standardpalette, kann auch die Anordnung der Paletteneinheiten auf sogenannten Rollcontainern erfolgen. Auch diese Möglichkeit wird, wie später noch gezeigt werden wird, von der erfindungsgemäßen Kommissionieranlage, die in Figur 1 dargestellt ist, berücksichtigt.

Die Kommissionieranlage umfasst eine Paletteneinheitenentlade- und -beladestation 1, welche mit einem Kommissionierlager 5 zusammenwirkt.

Das Kommissionierlager 5 ist beim gezeigten Ausführungsbeispiel als Paletteneinheitenregallager ausgeführt, in welchem eine Vielzahl von Lagerplätzen für Paletteneinheiten übereinander und nebeneinander angeordnet sind.

Bei dem gezeigten Ausführungsbeispiel umfasst das Paletteneinheitenregallager zwei Regalreihen 2, 3, die parallel zu einander angeordnet sind und zwischen sich eine Regalgasse 4 einschließen, in welcher auch ein Regalgassenpfad 8 ausgebildet ist, auf dem mindestens ein Regalbediengerät 9 so verfahrbar ist, dass es jeden Lagerplatz der Paletteneinheitenregale erreichen kann, um dort Paletteneinheiten einzulagern und wieder zu entnehmen.

An der zweiten Seite der Regalreihe 2, die der ersten Seite der Regalreihe 2, an welcher das Regalbediengerät 9 auf dem Regalgassenpfad 8 verfahrbar ist, gegenüberliegt, ist ein Transportpfad 6 eines sogenannten Querverschiebewagens 7 vorgesehen, der sich nur über einen Teil der Länge der Regalreihe 2 erstreckt. Wie in der Zeichnung dargestellt ist, kann sich der Transportpfad 6 lediglich über ca. ein Drittel der Länge der Regalreihe 2 erstrecken oder alternativ über zwei Drittel bzw. Dreiviertel der Länge der Regalreihe 2.

Der Transportpfad 6 verbindet die Paletteneinheitenentlade- und -beladestation 1 mit dem Kommissionierlager 5 bzw. dem Paletteneinheitenregallager. Entsprechend können mit dem Querverschiebewagen 7 Paletteneinheiten von einer Anlieferstation 10 für Paletteneingangseinheiten in das Kommissionierlager 5 überführt und von dem Kommissionierlager 5 in Abgabestationen 11 für Palettenausgangseinheiten überführt werden.

Das gezeigte Ausführungsbeispiel weist zwei Abgabestationen 11 auf, bei denen der Querverschiebewagen 7 entsprechende Paletteneinheiten abladen kann.

Die Anlieferstation weist einen Zuführweg 13 auf, auf dem die Paletteneingangseinheiten, also mehrere Paletteneinheiten auf einem Palettenträger, angeliefert werden. Beispielsweise können sie aus einem anderen Lagerbereich, von einem Wareneingangslager, einem Pufferlager oder dergleichen zugeführt werden. Die sortenreinen Paletteneingangseinheiten werden in einer Entpackstation 14 von Verpackungsmaterial befreit, wie beispielsweise Schrumpffolien oder dergleichen. Dann werden sie weiter zur Anlieferstation befördert, beispielsweise über entsprechende Rollbahnen oder sonstige kontinuierliche Förderanlagen.

An der Anlieferstation 10 wird die Paletteneingangseinheit aufgelöst, in dem die einzelnen Paletteneinheiten entladen werden. Dazu greift der Querverschiebewagen 7, der beispielsweise entsprechende Greifeinrichtungen, wie Ladegabeln oder dergleichen aufweist, die entsprechenden Paletteneinheiten und transportiert sie entweder in das Kommissionierlager 5 oder, falls es der Kommissionierauftrag zulässt, direkt zu einer Abgabestation 11. Im Normalfall wird jedoch zunächst eine Einlagerung der Paletteneinheiten in das Kommissionierlager 5 erfolgen, wo die Paletteneinheiten in entsprechenden Lagerplätzen eingelagert werden. Der Querverschiebewagen 7 ist hierbei so ausgerüstet, dass er die Paletteneinheiten auch in entsprechende Lagerplätze der Regalreihe 2 einlagern kann.

Da sich der Transportpfad 6 nur über einen Teil der Länge der Regalreihe 2 erstreckt und somit der Querverschiebewagen 7 nur einen Teil der Lagerplätze der Regalreihe 2 erreichen kann, können die in Regalreihe 2 eingelagerten Paletteneinheiten von dem Regalbediengerät 9 entnommen und in andere Lagerplätze des Kommissionierlagers 5 eingelagert werden.

Da der gesamte Kommissioniervorgang und somit auch der Entladeprozess sowie die Einlagerung der Paletteneinheiten in das Kommissionierlager 5 vollautomatisiert erfolgt, wird durch ein Steuer- und Überwachungssystem, welches mittels einer entsprechend programmtechnisch eingerichteten Datenverarbeitungsanlage realisiert ist, überwacht, welche Waren an der Anlieferstation zur Verfügung stehen und wo die entsprechenden Paletteneinheiten in dem Kommissionierlager 5 eingelagert werden. Entsprechend ist in dem Steuer- und Überwachungssystem bekannt, welche Waren wo in dem Kommissionierlager angeordnet sind. Bei einem entsprechenden Kommissionierauftrag, bei welchem bestimmte Paletteneinheiten mit bestimmten Waren auf einem Palettenträger zusammengestellte werden sollen, kann das Steuerungs- und Überwachungssystem die entsprechenden Paletteneinheiten aus dem Kommissionierlager 5 anfordern, sodass über das Regalbediengerät 9 und den Querverschiebewagen 7 vollautomatisiert die entsprechenden Paletteneinheiten an die Abgabestationen 11 angeliefert werden. Dort werden die entsprechenden Paletteneinheiten auf einem Palettenträger abgestellt, sodass Palettenausgangseinheiten mit unterschiedlichen Waren gebildet werden können.

Der Querverschiebewagen 7 kann hierbei so ausgestaltet sein, dass er lediglich eine Paletteneinheit oder aber auch zwei oder drei Paletteneinheiten gleichzeitig aufnehmen und transportieren kann und die Palettenträger an der Anlieferstation 10 verbleiben oder den Abgabestationen 11 bereitgestellt sind. Alternativ ist es auch vorstellbar, dass der Querverschiebewagen 7 bereits die entsprechenden Palettenträger aufweist und die einzeln zu entnehmenden Paletteneinheiten auf diesem mittransportierten Palettenträger abstellt und bei den Abgabestationen 11 lediglich den entsprechend beladenen Palettenträger abgibt.

Sofern als Palettenausgangseinheit ein Palettenträger, wie beispielsweise eine EU-Standardpalette, mit Viertel- oder Halbpaletten mit unterschiedlichen Waren zusammengestellt werden soll, wobei ein an den Abgabestationen 11 bereit gestellter oder als vom Querverschiebewagen 7 mitgeführter Palettenträger ein Palettenträger eingesetzt wird, der auch für die Palettenausgangseinheit verwendet wird, ist der Kommissioniervorgang mit der Bereitstellung des mit verschiedenen Paletteneinheiten beladenen Palettenträgers an der Abgabestation 11 bereits beendet. Die entsprechende Palettenausgangseinheit kann dann über den Ausgabepfad 15 in ein Warenausgangslager, einen entsprechenden Warenausgangspuffer oder ein Zwischenlager oder dergleichen transportiert werden. In dem Ausgangspfad 15 kann eine Verpackstation 16 vorgesehen sein, bei der die Palettenausgangseinheit mit zusätzlichen Verpackungsmitteln versehen wird, wie beispielsweise Schrumpffolien, Umreifungen oder dergleichen.

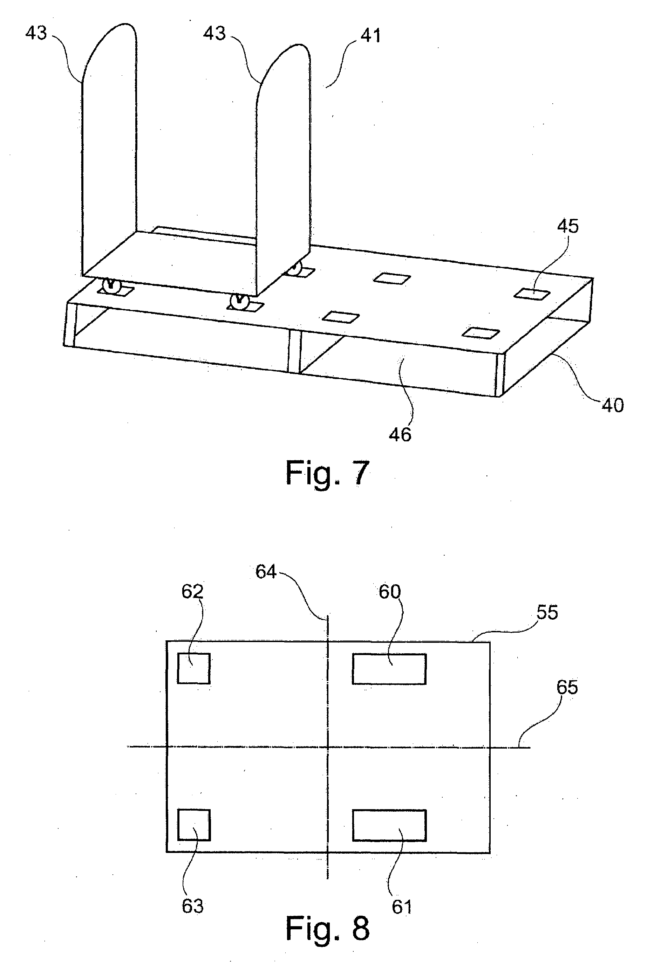

Die Kommissionieranlage der Figur 1 umfasst weiterhin eine Rollcontainer-Paletten-Beladestation 12, die einer der Abgabestationen 11 zugeordnet ist. Die Rollcontainer-Paletten-Beladestation wird über einen Rollcontainerzuführpfad 17 mit leeren Rollcontainern versorgt, die vorzugsweise paarweise auf einem Rollcontainerträger angeordnet sind, wie in Figur 7 dargestellt ist.

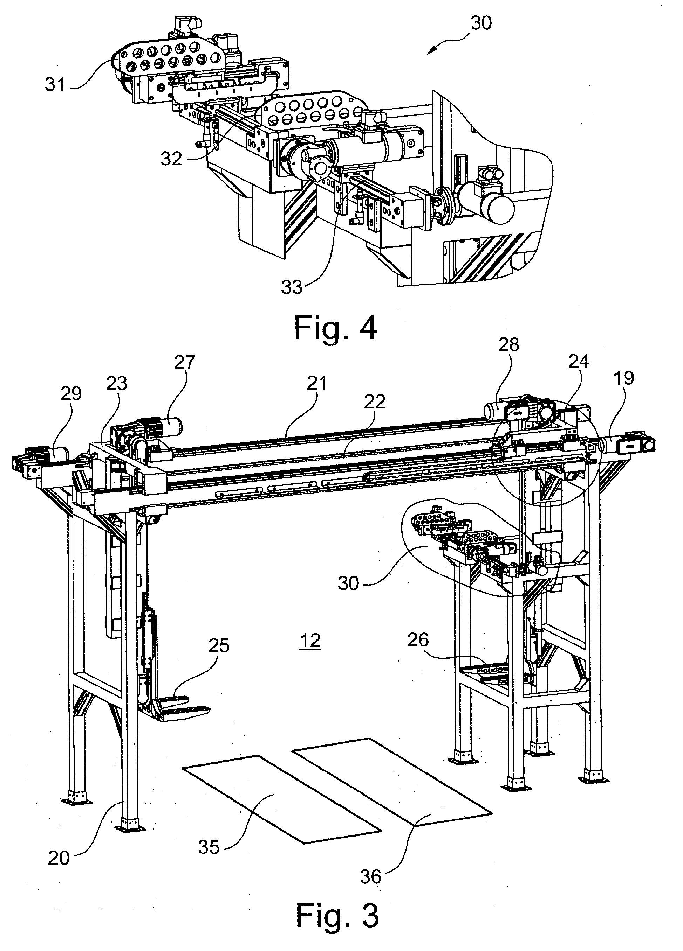

In der Rollcontainer-Paletten-Beladestation 12, die detaillierter in den Figuren 3 und 4 dargestellt ist, werden die auf einem Palettenträger, der auch als Zwischenträger bezeichnet werden kann, bereitgestellten, unterschiedlichen Paletteneinheiten in die entsprechenden Rollcontainer verladen, wie nachfolgend noch näher beschrieben werden wird.

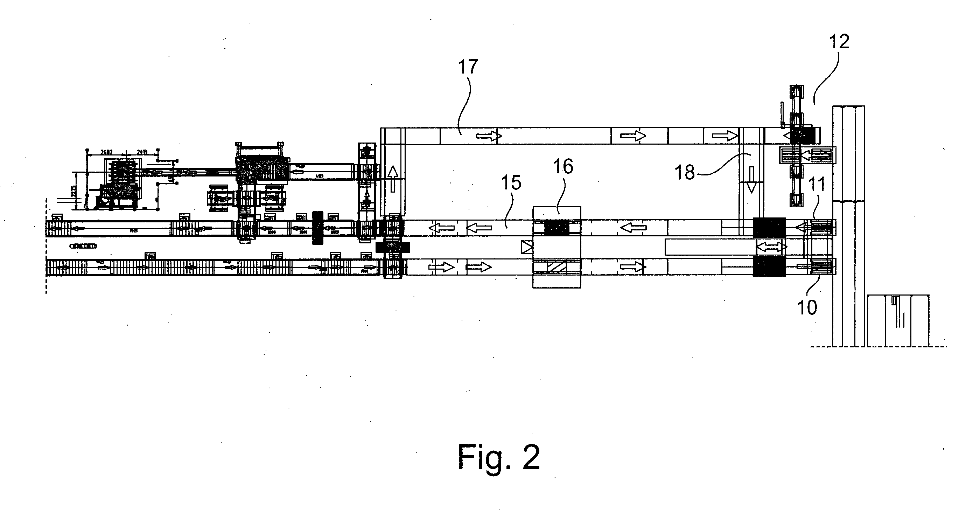

Die Figur 2 zeigt die Paletteneinheitenentlade- und Beladestation 1 in größerem Detail, sodass die einzelnen Komponenten besser erkennbar sind. Beispielsweise ist zu erkennen, dass zwischen der Anlieferstation 10 und der Abgabestation 11 ein Puffer für Leerpaletten bzw. ein entsprechender Stapler zur Stapelung der Leerpaletten vorgesehen ist.

Außerdem ist hier im Detail zu erkennen, dass die in der Rollcontainer-Paletten-Beladestation 12 beladenen Rollcontainer über den Verbindungspfad 18 auf den Aufgabepfad 15 geführt werden können, wobei sie in der Verpackungsstation 16 ebenfalls zusätzlich verpackt werden können.

Die Figur 3 zeigt die Rollcontainer-Paletten-Beladestation 12 in einer perspektivischen Darstellung.

Die Rollcontainer-Paletten-Beladestation 12 umfasst ein Gestell 20, welches in Form einer Brücke oder eines Bogens eine Rollcontainer-Bereitstellungsposition 36 und eine Paletten-Bereitstellungsposition 35 überbrückt. Die Rollcontainer-Bereitstellungsposition 36, welche ähnlich der Paletten-Bereitstellungsposition 35 lediglich schematisch dargestellt ist, ist mit einer Fördereinrichtung verbunden, sodass die auf einem Rollcontainerträger angeordneten Rollcontainer (siehe Figur 7) in der Rollcontainer-Bereitstellungsposition angeordnet werden können. Das gleiche gilt für die Paletten-Bereitstellungsposition 35, an der die auf einem Palettenträger angeordneten Paletteneinheiten bereitgestellt werden.

Das Gestell 20 umfasst zwei Schienen 21, 22 auf denen ein erster Schlitten 23 und ein zweiter Schlitten 24 angeordnet sind, die Palettentragevorrichtungen 25, 26 in Form von Ladegabeln umfassen. Die Ladegabeln 25 und 26 sind mittels der Elektromotoren 27 und 28 jeweils in ihrer Höhe verstellbar, sodass sie Paletteneinheiten anheben können, sofern die Transportgabel 25 bzw. 26 in die entsprechenden Aussparungen einer Palette eingreifen. Mittels des Elektromotors 29 bzw. des Elektromotors 19 sind der erste und der zweite Schlitten 23, 24 entlang der Schienen 21, 22 fahrbar, sodass sie Paletteneinheiten zwischen der Palettenbereitstellungsposition 35 und der Rollcontainer-Bereitstellungsposition 36 verfahren können.

An einer der Säulen des Gestells 20 ist eine Seitenwand-Spreizvorrichtung 30 vorgesehen, bei welcher Spreizelemente 31 und 32 entlang einer Schiene 33 so verfahrbar sind, dass sich ihr Abstand zu einander verändern lässt. Außerdem sind sie quer zur Richtung der Schiene 33 verfahrbar, sodass bei einem Rollcontainer, der in der Rollcontainer-Bereitstellungsposition 36 angeordnet ist, die Spreizelement 31 und 32 zwischen die Seitenwände eines Rollcontainers (siehe Figur 7) einfahren können und die Seitenwände nach außen drücken können.

Dadurch wird sichergestellt, dass bei dem zu beladenden Rollcontainern ausreichend Platz für das Beladen mit der Paletteneinheit geschaffen ist.

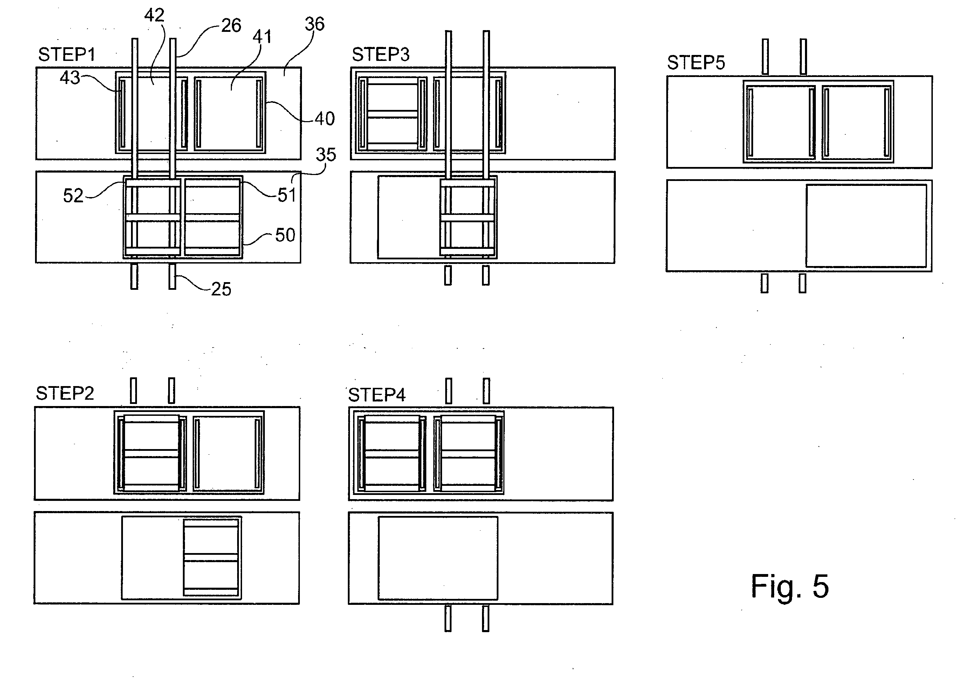

Die Figur 5 zeigt in einer schematischen Darstellung den Ablauf eines Beladevorgangs zweier Rollcontainer, die auf einem gemeinsamen Rollcontainerträger angeordnet sind.

In Schritt 1 (step 1) ist ein Rollcontainerträger 40 mit zwei Rollcontainern 41, 42 in der Rollcontainer-Bereitstellungsposition 36 angeordnet. Von den Rollcontainern 41, 42 sind im Wesentlichen die Seitenwände 43 dargestellt. In der Palettenbereitstellungsposition 35 ist ein Palettenträger 50 mit zwei Halbpaletten 51, 52 angeordnet. Durch entsprechende Sensoren, wie beispielsweise Lichtschranken oder dergleichen, die in der Rollcontainer-Paletten-Beladestation 12 vorgesehen sind (nicht in den Figuren dargestellt), werden jeweils ein Rollcontainer, hier der Rollcontainer 43 und eine Halbpalette, hier die Halbpalette 52 so zueinander ausgerichtet, dass durch die Transportgabel 26, die auch als Teleskopgabel ausgebildet sein kann, die Halbpalette 52 aufgenommen und auf den Rollcontainer 42 übertragen werden kann.

Im Schritt 2 (step 2) ist die Halbpalette 52 im Rollcontainer 42 abgestellt. Dann wird in Schritt 3 sowohl der Rollcontainerträger 40 als auch der Palettenträger 50 so verfahren, dass die Halbpalette 51 und der Rollcontainer 41 zueinander ausgerichtet sind. Dann nimmt die Transportgabel 26 wiederum die Halbpalette 51 auf und verfährt sie in Richtung des Rollcontainers 41. Dazu wird zunächst die Transportgabel 26 in die Öffnungen der Halbpalette 51 eingeführt, anschließend über den Elektromotor 28 angehoben und über die Schienen 21 und 22 in Richtung des Rollcontainers 41 bewegt. Sobald die Transportgabel 26 die Position über dem Rollcontainer 41 erreicht hat, wird die Transportgabel abgesenkt, sodass die Halbpalette 51 auf dem Rollcontainer abgestellt wird.

Im Schritt 5 (step 5) ist bereits der nächste Rollcontainerträger mit Rollcontainern in der Warteposition, um die nächsten Paletteneinheiten zu erhalten.

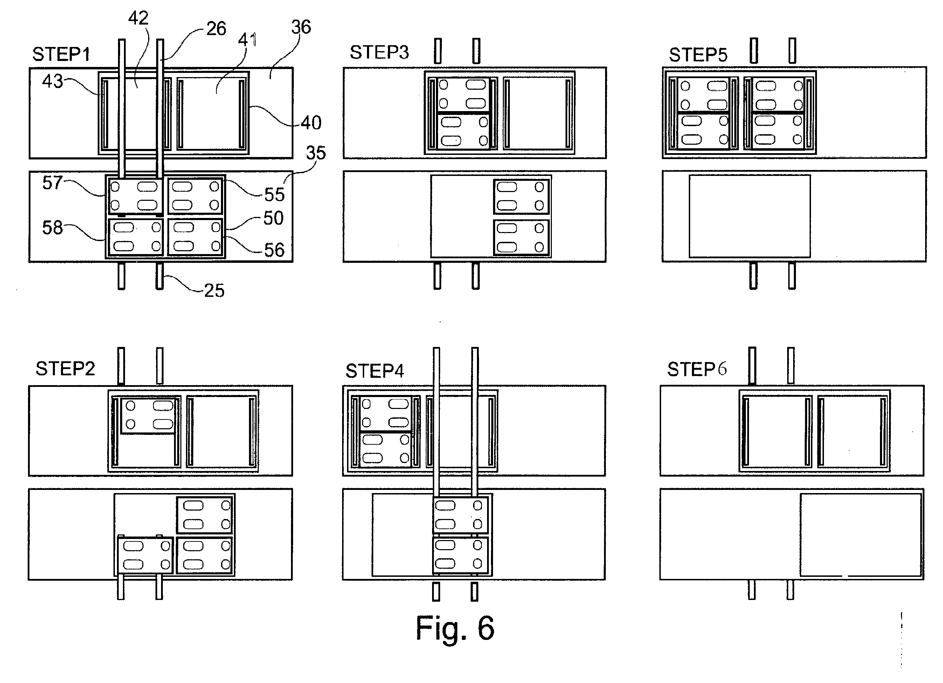

Die Figur 6 zeigt die Funktionsweise der Rollcontainer-Paletten-Beladestation 12 aus Figur 3 zur Beladung von Rollcontainern mit Viertelpaletten.

Während bei der Rollcontainer-Bereitstellungsposition 36 wiederum ein Rollcontainerträger 40 mit zwei Rollcontainern 41 und 42 bereitgestellt ist, sind in der Paletten-Bereitstellungsposition 35 vier Viertelpaletten 55, 56, 57 und 58 auf einem Palettenträger 50 bereitgestellt.

Da, wie später mit Bezug auf Figur 8 noch näher erläutert wird, die Füße der Viertelpaletten und somit die Eingriffsöffnungen für die Transportgabeln 25, 26 unsymmetrisch und somit je nach Anordnung der Viertelpaletten unterschiedlich ausgebildet sind, ist es unter Umständen nicht möglich, dass die Transportgabel 26 gleichzeitig zwei Viertelpaletten, im gezeigten Ausführungsbeispiel des Schritts 1 (step 1) die Viertelpaletten 57 und 58 ergreifen kann. In diesem Fall wird die Transportgabel 26 zunächst eine erste Viertelpalette in dem vorliegenden Fall die Viertelpalette 57 in den Rollcontainer 42 überführen, wobei nachfolgend oder gleichzeitig die zweite Transportgabel 25, die der ersten Transportgabel 26 gegenüberliegt, die zweite Viertelpalette 58 auf den Rollcontainer 42 überführt. Anschließend werden in den Schritten 3 bis 5 nach einer Neuausrichtung des Rollcontainers 41 mit den Viertelpaletten 55 und 56 die entsprechenden Viertelpaletten 55 und 56 auf den Rollcontainer 41 geladen. Da bei diesem Ausführungsbeispiel die Viertelpaletten 55 und 56 gleich ausgerichtet sind und somit eine durchgehende Eingriffsöffnung für die Ladegabel 26 gegeben ist, können die beiden Viertelpaletten 55 und 56 in einem Arbeitsgang von der Ladegabel 26 auf den Rollcontainer 41 geladen werden.

Die Position der Eingriffsöffnungen der Viertelpaletten kann wiederum durch entsprechende Sensoren, wie Lichtschranken und so weiter ermittelt werden und die Ausrichtung der Viertelpaletten bzw. der Rollcontainer in Bezug auf die Ladegabeln 25 und 26 kann durch entsprechenden Transport quer zur Bewegungsrichtung der Ladegabeln vorzugsweise mit der vorgesehenen Fördertechnik für den An- und Abtransport der Rollcontainerträger 40 und/oder der Palettenträger 50 vorgenommen werden.

Die Figur 7 zeigt einen Rollcontainerträger 40 mit einem darauf angeordneten Rollcontainer 41. Der Rollcontainerträger 40 kann entsprechend einer Palette ausgebildet sein, die Eingriffsöffnungen 46 für Ladegabeln oder dergleichen aufweist. An der Lagerfläche der Rollcontainerträger 40 können Vertiefungen 45 für die Rollen der Rollcontainer 41 vorgesehen sein, sodass die Rollcontainer sicher auf dem Rollcontainerträger 40 angeordnet sind.

Die Figur 7 zeigt weiterhin die Seitenwände 43 des Rollcontainers 41, die an zwei Seiten, nämlich zwei gegenüberliegenden Seiten des Rollcontainers 41, vorgesehen sind, und die durch die Seitenwand-Spreizvorrichtung 30 nach außen gedrückt werden, um ausreichend Platz für die Beladung mit einer Paletteneinheit zu schaffen.

Die Figur 8 zeigt die Unterseite einer Viertelpalette 55 mit den Füßen 60, 61, 62 und 63. Die Anordnung und Ausbildung der Füße 60 bis 63 bei den Viertelpaletten 55 ist ungleich und unsymmetrisch bezüglich der Mittelachse 64, während gegenüber der Mittelachse 65 eine symmetrische Ausbildung vorliegt. Entsprechend ergibt sich auch eine ungleichmäßige Verteilung der Eingriffsöffnungen zwischen oder neben den Füßen 60 bis 63, sodass dies entsprechend bei der Ausgestaltung der Rollcontainer-Paletten-Beladestation berücksichtigt werden muss.

Obwohl die vorliegende Erfindung anhand der Ausführungsbeispiele deutlich beschrieben worden ist, ist für den Fachmann klar verständlich, dass die Erfindung nicht auf diese Ausführungsbeispiele beschränkt ist, sondern dass vielmehr im Umfang der beigefügten Ansprüche Abwandlungen in der Weise möglich sind, dass unterschiedliche Kombinationen von vorgestellten Merkmalen möglich sind oder dass einzelne Merkmale weggelassen werden können. Die vorliegende Erfindung beansprucht insbesondere sämtliche Kombinationen aller vorgestellter Einzelmerkmale.

## Patentansprüche

1. Rollcontainer - Paletten - Beladestation zur automatisierten Beladung von Rollcontainern mit Paletteneinheiten mit
mindestens einer Rollcontainer-Bereitstellungsposition (36),
mindestens einer Palettenbereitstellungsposition (35),
mindestens einer ersten Palettentragevorrichtung (25,26) zum Aufnehmen, Abgeben und Transportieren von Paletteneinheiten, welche zwischen der Paletten - Bereitstellungsposition und der Rollcontainer - Bereitstellungsposition verfahrbar ist, wobei zumindest der Rollcontainer - Bereitstellungsposition (36) oder zumindest der Paletten - Bereitstellungsposition eine Transportvorrichtung zugeordnet ist, die es ermöglicht Rollcontainer und Paletteneinheiten relativ zueinander und zur Palettentragevorrichtung (25,26) zu verschieben,
**dadurch gekennzeichnet, dass**
die Rollcontainer - Paletten - Beladestation (12) eine zweite Palettentragevorrichtung (25) umfasst, die auf demselben Bewegungspfad zwischen Rollcontainer - Bereitstellungsposition (36) und der Paletten - Bereitstellungsposition (35) unabhängig von und zusammen mit der ersten Palettentragevorrichtung (26) verfahrbar ist.

2. Rollcontainer-Paletten-Beladestation nach Anspruch 1,
**dadurch gekennzeichnet, dass**
die Rollcontainer-Paletten-Beladestation (12) eine Seitenwand-Spreizvorrichtung (30) umfasst.

3. Rollcontainer-Paletten-Beladestation nach einem der Ansprüche 1 oder 2,
**dadurch gekennzeichnet, dass**
die zwei Palettentragevorrichtungen (25,26) Ladegabeln zum Ergreifen der Paletteneiuohezten umfassen, die aufeinander zuweisend angeordnet sind.

4. Vorrichtung zur Kommissionierung von Paletteneinheiten mit mindestens einer Anlieferstation (10) von Paletteneingangseinheiten, einem Handhabungsgerät (7) für Paletteneinheiten, der auf einem Transporipfad (6) verfahrbar ist und zur Aufnahme und Abgabe der Paletteneinheiten ausgebildet ist, einen Konwissionierlager (5), in dem Paletteneinheiten lagerbar sind, und mindestens einer Abgabestation (11) für Palettenausgangseinheiten, wobei die Vorrichtung weiterhin eine Rollcontainer-Paletten-Beladestation (12) nach einem der Ansprüche 1 bis 3 umfasst.

5. Vorrichtung nach Anspruch 4,
**dadurch gekennzeichnet, dass**
der Transportpfad (6) des Handhabungsgeräts (7) die mindestens eine Anlieferstation (10), das Kommissionierlager (5) und die mindestens eine Abgabestation (11) miteinander verbindet, so dass Paletteneinheiten untereinander austauschbar sind.

6. Vorrichtung nach Anspruch 4 oder 5,
dadurch gekennzeichet, dass
der Transportpfad (6) sich parallel zum Kommissionierlager (5) und/oder nur teilweise entlang des Kommissionierlagers (5) erstreckt.

7. Vorrichtung nach einem der Ansprüche 4 bis 6,
**dadurch gekennzeichnet, dass**
das Kommissionierlager (5) als Regallager ausgebildet ist und mindestens zwei Regalreihen (2,3) umfasst, die von mindestens einem Regalbediengerät (9) anfahrbar sind, welches zwischen den Regalreihen verfahrbar angeordnet ist, wobei der Transportpfad (6) des Handhabungsgeräts (7) sich auf der einen Seite einer Regalreihe befindet, die unterschiedlich zu der anderen, parallelen Seite derselben Regalreihe ist und der Seite des Regalbediengeräts gegenüber liegt.

8. Verfahren zur automatisierten Beladung von Rollcontainern mit Paletteneinheiten durch eine Rollcontainer-Paletten-Belade-Station nach einem der Ansprüche 1 bis 3 umfassend:
- Bereitstellen von einer oder mehreren Paletteneinheiten,
- Bereitstellen von einem oder mehreren Rollcontainern,
- Anordnen von Paletteneinheit und Rollcontainer nebeneinander, und
- Übertragen der Paletteneinheit auf den Rollcontainer durch mindestens eine lineare Bewegung mindestens einer Palettentragevorrichtung (25, 26) einer Rollcontainer-Paletten-Beladestation nach einem der Ansprüche 1 bis 3.

9. Verfahren nach Anspruch 8,
**dadurch gekennzeichnet, dass**
die Rollcontainer (41) auf einem Rollcontainerträger (40) und/oder die Paletteneinheiten auf einem Palettenträger bereit gestellt werden.

10. Verfahren nach Anspruch 8 oder 9,
**dadurch** gekenntzeichnet, dass
die Seitenwände (43) der Rollcontainer (41) beim Beladen durch eine Seitenwand-Spreizvorrichtung auseinander gespreizt werden.

11. Verfahren zur automatisierten Kommissionierung von Paletteneinheiten umfassend:
- Entladen von Paletteneinheiten einer Paletteneingangseinheit von einem Palettenträger der Paletteneingangseinheit mit mehreren identischen Paletteneinheiten,
- Einlagern der Paletteneinheiten in ein Kommissionierlager (5), und
- Entnahme von Paletteneinheiten aus dem Kommissionierlager (5) zur Zusammenstellang potentiell verschiedener Paletteneinheiten auf einem Palettenträger, wobei die Paletteneinheiten mit dem Verfahren nach einem der Ansprüche 8 bis 10 automatisiert auf Rollcontainer (41) verladen werden.

12. Verfahren nach Anspruch 11,
**dadurch gekennzeichnet, dass**
das Entladen der Paletteneinheiten von einer Paletteneingangseinheit und das Einlagern der Paletteneinheiten in ein Paletteneinheitenregal mit einem Handhabungsgerät (7) für Paletteneinheiten vollautomatisiert erfolgt.

13. Verfahren nach Anspruch 11 oder 12,
**dadurch gekennzeichnet, dass**
ein Teil der entladenen Paletteneinheiten direkt zum Beladen eines Palettenträgers mit gemischten Paletteneinheiten verwendet wird.

14. Verfahren nach einem der Ansprüche 11 bis 13,
**dadurch gekennzeichnet, dass**
der mit gemischten Paletteneinheiten beladene Palettenträger eine Palettenausgangseinheit oder eine Zwischenform für die anschließende Beladung von Rollcontainern (41) darstellt.

## Claims

1. Roll container - pallet loading station for the automated loading of roll containers with pallet units, comprising
at least one roll container supply position (36)
at least one pallet supply position (35),
at least a first pallet-carrying apparatus (25, 26) the purpose of which is to receive, discharge and transport pallet units and which can be moved between the pallet supply position and the roll container supply position, wherein at least the roll container supply position (36) or at least the pallet supply position is assigned to a transport apparatus, which enables roll containers and pallet units to be displaced relative to each other and to the pallet-carrying apparatus (25, 26),
**characterised by** the fact that
the roll container - pallet loading station (12) comprises a second pallet-carrying apparatus (25) that can be moved on the same path of movement between roll container supply position (36) and the pallet supply position (35), independently of and together with the first pallet-carrying apparatus (26).

2. Roll container - pallet loading station in accordance with claim 1,
**characterised by** the fact that
the roll container - pallet loading station (12) comprises a side-wall spreading device (30).

3. Roll container - pallet loading station in accordance with any of claims 1 or 2,
**characterised by** the fact that
the two pallet/carrying apparatuses (25, 26) comprise loading forks for gripping the pallet units that are arranged so as to point towards each other.

4. Apparatus for order-picking of pallet units comprising at least one delivery station (10) of inbound pallet units, a handling device (7) for pallet units which can be moved on a transport path (6) and is configured for receiving and discharging the pallet units, an order-picking warehouse (5), in which pallet units can be stored, and at least one discharge station (11) for outbound pallet units, wherein said apparatus further comprises a roll container - pallet loading station (12) in accordance with any of claims 1 to 3.

5. Apparatus in accordance with claim 4,
**characterised by** the fact that
the transport path (6) of the handling device (7) connects the at least one delivery station (10), the order-picking warehouse (5) and the at least one discharge station (11) to one another, so that pallet units are interchangeable.

6. Apparatus in accordance with claim 4 or 5,
**characterised by** the fact that
the transport path (6) extends parallel with the order-picking warehouse (5) and/or only partially along the order-picking warehouse (5).

7. Apparatus in accordance with any of claims 4 to 6,
**characterised by** the fact that
the order-picking warehouse (5) is configured as a racking warehouse, and comprises at least two rows of racks (2, 3) which are accessible from at least one storage and retrieval device (9) which is movably arranged between the rows of racks, wherein the transport path (6) of the handling device (7) is located on one side of a row of racks, which is different from the other parallel side of the same row of racks and is located opposite the side of the storage and retrieval device.

8. Method for automated loading of roll containers with pallet units by a roll container - pallet loading station in accordance with any of claims 1 to 3, comprising:
- Supply of one or more pallet units,
- Supply of one or more roll containers,
- Arranging of pallet unit and roll container next to each other, and
- Transfer of the pallet unit to the roll container by at least one linear movement of at least one pallet-carrying apparatus (25, 26) of a roll container - pallet loading station in accordance with any of claims 1 to 3.

9. Method in accordance with claim 8,
**characterised by** the fact that
the roll containers (41) are supplied on a roll container carrier (40) and/or the pallet units on a pallet carrier.

10. Method in accordance with claim 8 or 9,
**characterised by** the fact that
the side walls (43) of the roll containers (41) are spread apart by a side-wall spreading device during loading.

11. Method for automated picking of pallet units comprising:
- Unloading of pallet units of an inbound pallet unit from a pallet carrier of the inbound pallet unit having a plurality of identical pallet units,
- Storing the pallet units in an order-picking warehouse (5), and
- Removing pallet units from the order-picking warehouse (5) for assembling potentially different pallet units on a pallet carrier, wherein the pallet units are loaded in an automated manner onto a roll container (41) by the method in accordance with any of claims 8 to 10.

12. Method in accordance with claim 11,
**characterised by** the fact that
unloading of the pallet units from an inbound pallet unit and storing of the pallet units in racking proceed in a fully automated manner with a handling device (7) for pallet units.

13. Method in accordance with claim 11 or 12,
**characterised by** the fact that
a portion of the unloaded pallet units is directly used for loading a pallet carrier with mixed pallet units.

14. Method in accordance with any of claims 11 to 13, **characterised by** the fact that
the pallet carrier loaded with mixed pallet units represents an outbound pallet unit or an intermediate form for the subsequent loading of roll containers (41).

## Revendications

1. Poste de chargement de palettes à conteneurs sur roues pour le chargement automatisé de conteneurs sur roues avec des unités de palettes avec
au moins une position de mise à disposition de conteneurs sur roues (36),
au moins une position de mise à disposition de palettes (35),
au moins un premier dispositif de support de palettes (25, 26) pour recevoir, distribuer et transporter des unités de palettes qui est déplaçable entre la position de mise à disposition de palettes et la position de mise à disposition de conteneurs sur roues, cependant qu'un dispositif de transport est associé à au moins la position de mise à disposition de conteneurs sur roues (36) ou à au moins la position de mise à disposition de palettes, dispositif de transport qui permet de déplacer des conteneurs sur roues et des unités de palettes les unes par rapport aux autres et vers le dispositif de support de palettes (25, 26), **caractérisé en ce que** le poste de chargement de palettes à conteneurs sur roues comprend un second dispositif de support de palettes (25) qui est déplaçable sur le même trajet de déplacement entre la position de mise à disposition de conteneurs sur roues (36) et la position de mise à disposition de palettes (35) indépendamment de et avec le premier dispositif de support de palettes (25, 26).

2. Poste de chargement de palettes à conteneurs sur roues selon la revendication 1, **caractérisé en ce que** le poste de chargement de palettes à conteneurs sur roues (12) comprend un dispositif d'écartement de paroi latérale (30).

3. Poste de chargement de palettes à conteneurs sur roues selon l'une des revendications 1 ou 2, **caractérisé en ce que** les deux dispositifs de support de palettes (25, 26) comprennent des fourches de chargement pour saisir les unités de palettes qui sont placées en étant tournées les unes vers les autres.

4. Dispositif pour la préparation de commandes d'unités de palettes avec au moins un poste de livraison (10) d'unités d'entrée de palettes, un appareil de manutention (7) pour unités de palettes qui est déplaçable sur un trajet de transport (6) et qui est configuré pour recevoir et distribuer des unités de palettes, un entrepôt de préparation de commandes (5) dans lequel des unités de palettes peuvent être stockées et au moins un poste de distribution (11) pour des unités de sortie de palettes, cependant que le dispositif comprend de plus un poste de chargement de palettes à conteneurs sur roues (12) selon l'une des revendications 1 à 3.

5. Dispositif selon la revendication 4, **caractérisé en ce que** le trajet de transport (6) relie de l'appareil de manutention (7) relie le poste de livraison qui existe au moins (10), l'entrepôt de préparation des commandes (5) et le poste de distribution qui existe au moins (11) entre eux de telle manière que des unités de palettes peuvent être interchangées.

6. Dispositif selon la revendication 4 ou 5, **caractérisé en ce que** le trajet de transport (6) s'étend parallèlement à l'entrepôt de préparation des commandes (5) et/ou seulement partiellement le long de l'entrepôt de préparation des commandes (5).

7. Dispositif selon l'une des revendications 4 à 6, **caractérisé en ce que** l'entrepôt de préparation des commandes (5) est configuré comme entrepôt à rayonnages et comprend au moins deux rangées de rayonnages (2, 3) qui sont accessibles par au moins un gerbeur (9) qui est placé déplaçable entre les rangées de rayonnages, cependant que le trajet de transport (6) de l'appareil de manutention (7) se trouve sur l'un des côtés d'une rangée de rayonnages qui est différent de l'autre côté parallèle de la même rangée de rayonnages et qui est opposé au côté de l'appareil de manutention (7).

8. Procédé pour le chargement automatisé de conteneurs sur roues avec des unités de palettes par un poste de chargement de palettes à conteneurs sur roues selon l'une des revendications 1 à 3 comprenant :
- mise à disposition d'une ou de plusieurs unités de palettes,
- mise à disposition d'un ou de plusieurs conteneurs sur roues,
- disposition d'une unité de palette et d'un conteneur sur roues l'un à côté de l'autre et
- transfert de l'unité de palette sur le conteneur sur roues par au moins un mouvement linéaire d'au moins un dispositif de support de palettes (25, 26) d'un poste de chargement de palettes à conteneurs sur roues selon l'une des revendications 1 à 3.

9. Procédé selon la revendication 8, **caractérisé en ce que** les conteneurs sur roues (41) sont mis à disposition sur un support de conteneurs sur roues (40) et/ou les unités de palettes sur un support de palettes.

10. Procédé selon la revendication 8 ou 9, **caractérisé en ce que** les parois latérales (43) des conteneurs sur roues (41) sont écartées l'une de l'autre par un dispositif d'écartement lors du chargement.

11. Procédé pour la préparation automatisée de commandes d'unités de palettes comprenant :
- déchargement d'unités de palettes d'une unité d'entrée de palettes d'un support de palettes de l'unité d'entrée de palettes avec plusieurs unités de palettes identiques,
- stockage des unités de palettes dans un entrepôt de préparation de commandes (5) et
- prélèvement des unités de palettes de l'entrepôt de préparation de commandes (5) pour rassembler des unités de palettes potentiellement différentes sur un support de palettes, cependant que les unités de palettes sont chargées de manière automatisée sur des containers à roulettes (41) avec le procédé selon l'une des revendications 8 à 10.

12. Procédé selon la revendication 11, **caractérisé en ce que** le déchargement des unités de palettes d'une unité d'entrée de palettes et le stockage des unités de palettes dans une étagère d'unités de palettes se fait avec un appareil de manutention (7) pour unités de palettes de manière entièrement automatisée.

13. Procédé selon la revendication 11 ou 12, **caractérisé en ce qu'**une partie des unités de palettes déchargées est utilisée directement pour charger un support de palettes avec des unités de palettes mélangées.

14. Procédé selon l'une des revendications 11 à 13, **caractérisé en ce que** le support de palettes chargé des unités de palettes mélangées constitue une unité de sortie de palettes ou une forme intermédiaire pour le chargement consécutif de conteneurs à roulettes (41).
